Europäisches Patentamt

European Patent Office

Office européen des brevets

(19)

(11) Veröffentlichungsnummer: **0 050 607**
**B1**

(12) **EUROPÄISCHE PATENTSCHRIFT**

(45) Veröffentlichungstag der Patentschrift:
**22.05.85**

(51) Int. Cl.⁴: **A 43 B 5/04,** F 16 F 1/40

(21) Anmeldenummer: **81890168.8**

(22) Anmeldetag: **13.10.81**

(54) **Skischuh.**

(30) Priorität: **16.10.80 AT 5140/80**

(43) Veröffentlichungstag der Anmeldung:
**28.04.82 Patentblatt 82/17**

(45) Bekanntmachung des Hinweises auf die Patenterteilung:
**22.05.85 Patentblatt 85/21**

(84) Benannte Vertragsstaaten:
**CH DE FR IT LI**

(56) Entgegenhaltungen:
**DE - A - 1 964 402**
**DE - A - 2 025 283**
**DE - A - 2 057 094**
**DE - A - 2 404 447**
**DE - B - 2 066 105**
**FR - A - 2 341 283**
**FR - A - 2 416 661**
**US - A - 3 437 332**
**US - A - 3 480 268**

(73) Patentinhaber: **Koflach Sportgeräte Gesellschaft m.b.H,**
**Alte Hauptstrasse 7, A-8580 Köflach (AT)**

(72) Erfinder: **Fritsch, Felix, Prof. Dr., Robert-Fuchsgasse 2a,**
**A-1140 Wien (AT)**

(74) Vertreter: **Kretschmer, Adolf, Dipl.-Ing., Patentanwälte**
**Dipl.Ing. A. Kretschmer Dr. Thomas M. Haffner**
**Schottengasse 3a, A-1014 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Skischuh mit einem an einer Schale schwenkbar angelenkten Schaft und einer von einem federnden und dämpfenden Element gebildeten Einrichtung zur Begrenzung der Verschwenkung des Schaftes relativ zur Schale, welches zwischen Schaft und Schale am Schaft und an der Schale schwenkbar festgelegt ist, insbesondere zur Verwendung mit einem Innenschuh. Bei derartigen bekannten Skischuhen wird der Schaft unter Vermittlung von Schnallen oder anderen Schliesselementen gegen den Unterschenkel eines Skifahrers und gegen die Schale gespannt. In geschlossenem Zustand wird die Verschwenkbarkeit des Schaftes relativ zur Schale in erster Linie durch Friktion des Materials des Schaftes an der Aussenwand der Schale beschränkt. Die Friktionseigenschaften des Materials der Schale und des Schaftes sind aber in erheblichem Masse temperaturabhängig und werden darüber hinaus durch gegebenenfalls zwischen Schale und Schaft auftretende Vereisung oder Wasserfilme in unkontrollierter Weise verändert. Skischuhkonstruktionen sollen aber nun im Falle eines Unfalles mit Sicherheit in der Lage sein, komplizierte und schwer ausheilende Brüche, insbesondere Knöchelbrüche, zu vermeiden und eben diese Aufgabe kann nur dann gelöst werden, wenn eine exakte Definition des Biegemoments vor Erreichen der Sperrstellung des Sprunggelenkes sichergestellt ist. Eine wesentliche Forderung an einen sicheren Skischuh besteht somit darin, dass die Sperrstellung des Sprunggelenkes bei ca. 45° Vorlage nur mit einem Biegemoment erreichbar ist, das dem Mindestbruchmoment für einen mittleren Knochendurchmesser entspricht. Eine derartige Forderung darf aber nicht zur Ausbildung eines biegesteifen Schuhschaftes führen, wenn der Tragekomfort des Schuhes erhalten bleiben soll. Für den Komfort eines Skischuhes ist es von wesentlicher Bedeutung, dass ein ausreichender Winkelweg von einer Schaftausgangsstellung bis zu einer Stellung in Sicherheitsabstand von der Sperrstellung des Sprunggelenkes gewährleistet ist. Dieser Winkelweg soll mindestens 20° betragen und es soll darüber hinaus auch die Möglichkeit bestehen, den Schaft über eine neutrale Stellung, welche der üblichen Vorlage eines Skifahrers mit ca. 9 bis 12° zur Sohlenebene entspricht, hinaus, in Richtung einer Stellung des Beines vertikale auf die Sohlenebene zu verschwenken, um einen hohen Komfort auch beim Stehen zu sichern. Alle diese Bedingungen lassen sich auf Grund der Temperaturabhängigkeit und der mechanischen Eigenschaften der für Schalen von Skischuhen in Frage kommenden Kunststoffe nicht ohne weiteres durch Friktion des Schaftes an der Schale lösen.

Es ist bereits bekannt, Skischuhe mit einer relativ biegesteifen Zunge zu versehen und diese Zunge federnd gegen einen Punkt nahe der Schuhspitze abzustützen. Auf diese Weise lässt sich zwar die maximal zulässige Vorlage beschränken, jedoch treten mit zunehmender Vorlage in unerwünschtem Masse hohe Rückstellkräfte auf. Da die bisher zum Einsatz gelangten Elemente Federelemente waren, wurde auch die Dämpfung von plötzlichen Schlägen in der Vorlagestellung nur ungenügend beherrscht.

Ein Skischuh der eingangs genannten Art ist aus der DE-A 1 964 402 bekannt geworden. Bei dieser bekannten Ausbildung ist ein relativ zur Schale flexibler Schaftteil über ein einstellbares Anschlagelement in seiner Beweglichkeit begrenzt, wobei das Anschlagelement als die Unterschale mit dem Schaft verbindendes Zylinder-Kolben-Aggregat ausgebildet ist, dessen Kolben mit Reibungsschluss im Zylinder gehalten ist.

Die Erfindung zielt nun darauf ab, die geforderte Kinematik und Dämpfung der Verschwenkung des Schaftes gegenüber der Schale unabhängig vom Material der Schale und des Schaftes zu halten und mit lediglich einem Element eine exakte Definition der gewünschten winkelabhängigen Biegemomente für eine weitere Verschwenkung des Schaftes zu schaffen, ohne dass hiebei nennenswerte Rückstellkräfte auftreten. Zur Lösung dieser Aufgabe besteht die Erfindung im wesentlichen darin, dass der Schaft frei schwenkbar an der Schale angelenkt ist und dass das federnde und dämpfende Element von einem doppelt wirkenden Zylinder-Kolben-Aggregat gebildet ist, dessen Arbeitsräume elastomere Kunststoffe, insbesondere Gummielemente, enthalten, deren Querschnittsform in dem einer neutralen Lage des Schaftes relativ zur Schale, insbesondere einer üblichen Vorlage von 9 bis 12° zur Sohlenebene, entsprechenden entspannten Zustand das Volumen der Arbeitsräume nur unvollständig ausfüllt. Dadurch, dass der Schaft frei schwenkbar an der Schale angelenkt ist, werden die temperaturbedingten Einflüsse des Materials der Schale und des Schaftes ausgeschaltet und die gewünschte Dämpfung wird ausschliesslich von dem zwischen Schaft und Schale am Schaft und an der Schale schwenkbar festgelegten federnden und dämpfenden Element gebildet. Die Federung soll hiebei eine weitgehend kraftfreie Rückstellung in die Ausgangslage bzw. die oben erwähnte Neutralstellung gewährleisten und durch die Anordnung eines gesonderten dämpfenden Elementes, welches allein für die Dämpfung der Verschwenkung verantwortlich ist, lässt sich die gewünschte Kinematik mit der erforderlichen Präzision einstellen. Erfindungsgemäss ist das federnde und dämpfende Element von einem doppelt wirkenden Zylinder-Kolben-Aggregat gebildet. Es ist prinzipiell denkbar, ein derartiges dämpfendes Element als hydraulisches oder pneumatisches Zylinder-Kolben-Aggregat auszubilden, wobei jedoch die Konstruktion durch Verwendung von vorgespannten Ventilen im Inneren des Zylinder-Kolben-Aggregates relativ aufwendig wäre. Eine ausgezeichnete Dämpfung in der gewünschten Weise ergibt sich erfindungsgemäss dadurch, dass die Arbeitsräume des Zylinder-Kolben-Aggregates elastomere Kunststoffe, insbesondere Gummielemente, enthalten, deren Querschnittsform in dem einer neutralen Lage des Schaftes relativ zur Schale, insbesondere einer üblichen Vorlage von 9 bis 12° zur Sohlenebene, entsprechenden entspannten Zustand, das Volumen der Arbeitsräume nur unvollständig ausfüllt. Derartige elastomere Kunststoffe, insbesondere Gummielemente, können elastisch verformt werden, wodurch sich geringe Rückstellkräfte ergeben. Da die elastomeren Kunststoffe bzw. Gummielemente jedoch inkompressibel sind, entsteht durch die Verformung eine zunehmende Reibung der Elemente aus elastomerem Kunststoff, bzw. Gummi, an den Wänden der Arbeitsräume. Eine Begrenzung mit zunehmender Dämpfung wird hiebei dann erreicht, wenn die Elemente aus elastomerem Kunststoff bzw. Gummi in vollständig verformtem Zustand die Arbeitsräume nahezu vollständig ausfüllen. Vorzugsweise sind hierbei die Elemente aus elastomerem Kunststoff, insbesondere aus Gummi, als in Achsrichtung des Zylinder-Kolben-Aggregates übereinander angeordnete O-Ringe bzw. als Ringe mit im wesentlichen dreieckigem Querschnitt ausgebildet. Bei elastischer Verformung derartiger Elemente nehmen diese in der Folge einen im wesentlichen rechteckigen bzw. quadratischen Querschnitt ein, und die Reibungsfläche an den Wänden der Arbeitsräume steigt mit der elastischen Verformung. Die Dämpfung der Verschwenkung nimmt somit progressiv zu und mit Rücksicht auf die relativ geringen elastischen Verformungskräfte bleiben die Rückstellkräfte in die der üblichen Vorlage entsprechende neutrale Lage relativ gering.

Zur Sicherstellung der freien Schwenkbarkeit ist die Ausbildung vorzugsweise so getroffen, dass die Innenwand des Schaftes über den gesamten Schwenkweg, vorzugsweise durch friktionsmindernde Beilagscheiben an den Gelenken, in Abstand von der Aussenwand der Schale gehalten ist. Um die Dichtheit der Schale zu gewährleisten, kann in einfacher Weise der Schaft über Faltenbälge im Ristbereich und im Fersenbereich mit der Schale verbunden sein.

Vorzugsweise ist das federnde und dämpfende Element im Fersenbereich des Schuhes angeordnet, da in diesem Bereich ohne Beeinträchtigung des Komforts ein entsprechend dimensioniertes dämpfendes Element untergebracht werden kann.

In besonders einfacher Weise ist die Ausbildung so getroffen, dass ein Druckkolben und ein Zugkolben jeweils als gesonderte Scheibe ausgebildet sind, welche mit Anschlägen einer Kolbenstange zusammenwirken. Auf diese Weise kann dem Umstand Rechnung getragen werden, dass von der Neutrallage ausgehend ein wesentlich grösserer Verschwenkwinkel in die Vorlage zugelassen werden soll als in die entgegengesetzte Richtung. Um zu verhindern, dass Anschläge der Kolbenstange mit dem Innenumfang der Elemente aus elastomerem Kunststoff, bzw. Gummi, kollidieren, und um eine Beschädigung dieser Elemente mit Sicherheit zu verhindern, kann die Ausbildung so getroffen sein, dass der Anschlag der den Druckkolben bildenden Scheibe als relativ zur Kolbenstange verschiebbar gelagerte Druckhülse ausgebildet ist, welche sich durch die Elemente für die Dämpfung der Vorlage erstreckt und eine obere Begrenzungsscheibe durchsetzt. Die Elemente aus elastomerem Kunststoff, bzw. Gummi, werden bei Zugbeanspruchung zwischen der Innenwand des Zylinders und der Druckhülse zusammengepresst, wodurch sich eine ausgezeichnete Dämpfung ergibt. Vor allen Dingen ermöglicht aber die gesonderte Ausbildung von Druckkolben und Zugkolben entsprechend den erforderlichen Federwegen bzw. Verschwenkwegen bei Zugbeanspruchung alle, und bei Druckbeanspruchung nur einen Teil der Elemente aus elastomerem Kunststoff, bzw. Gummi, zusammenzudrücken, wodurch das federnde und dämpfende Element mit geringen Baumassen ausgebildet werden kann. Es wird hiebei gleichzeitig dem Umstand Rechnung getragen, dass die Begrenzung des Verschwenkweges durch Druckbeanspruchung des federnden und dämpfenden Elementes bei einem Schwenkwinkel des Sprunggelenkes einsetzt, welcher etwa einer Stellung des Beines normal auf die Sohlenebene entspricht und somit in grösserem Sicherheitsabstand von einem für den Knöchel gefährlichen Schwenkwinkel liegt. Vorzugsweise weist hiebei die Druckhülse eine axiale Länge von 60 bis 80% der axialen Gesamtlänge der entspannten Elemente aus elastomerem Kunststoff, insbesondere Gummi, auf. Es werden somit bei Zugbeanspruchung, das ist somit, bei der maximal zulässigen Vorlage, sämtliche Elemente komprimiert, wohingegen bei einer Druckbeanspruchung lediglich 20 bis 40% der Elemente aus elastomerem Kunststoff, bzw. Gummi, zusammengepresst werden.

Um aussermittige Kräfte auf das Zylinder-Kolben-Aggregat bei starkem Kanteneinsatz zu vermeiden, weist das Zylinder-Kolben-Aggregat an seinen beiden Enden Lageraugen mit den Durchmesser des zugeordneten Verankerungsbolzen zumindest teilweise übersteigendem Innendurchmesser auf. Es wird somit eine seitliche Verschwenkbarkeit des Zylinder-Kolben-Aggregates aus der in Sohlenlängsrichtung verlaufenden Normalebene auf die Sohlenebene zugelassen.

Um das Gehen mit dem erfindungsgemässen Skischuh zu erleichtern, ist vorzugsweise der Verankerungsbolzen für die Verankerung des Zylinder-Kolben-Aggregates am Schaft lösbar und gegen Verlust gesichert ausgebildet und das Zylinder-Kolben-Aggregat am Verankerungsbolzen an der Schale, insbesondere durch eine Fanglasche, begrenzt verschwenkbar angelenkt. Durch Lösen des Verankerungsbolzens am Schaft ist der Schaft frei gegenüber der Schale schwenkbar und stellt somit keine Behinderung beim Gehen dar. Um ein Herabfallen des federnden, dämpfenden Elementes nach Lösen des oberen Verankerungsbolzens zu vermeiden, ist die Verschwenkbarkeit des Zylinder-Kolben-Aggregates am Verankerungsbolzen an der Schale begrenzt, wofür eine einfache Fanglasche genügt.

Vorzugsweise ist der Anlenkbolzen für das Zylinder-Kolben-Aggregat an der Schale an einem Exzenter angeordnet, dessen Drehlagen feststellbar sind. Durch Verstellen des Exzenters kann je nach fahrerischem Können die neutrale Lage um etwa ± 2° aus der Vorlagestellung von etwa 12° verlagert werden.

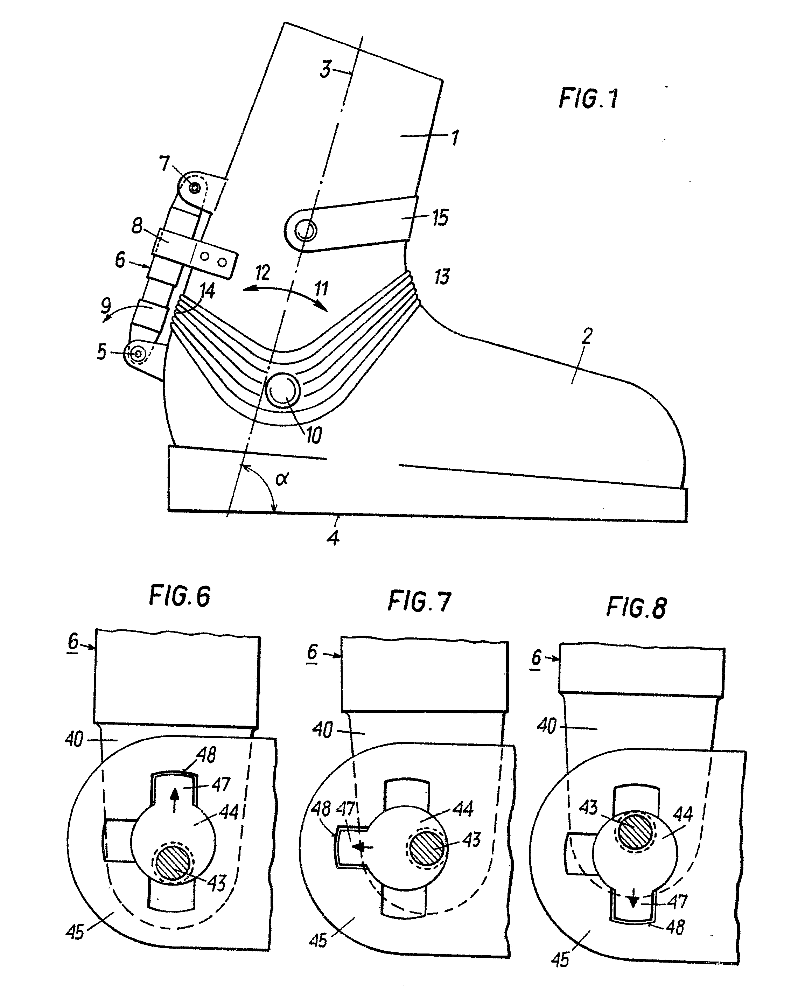

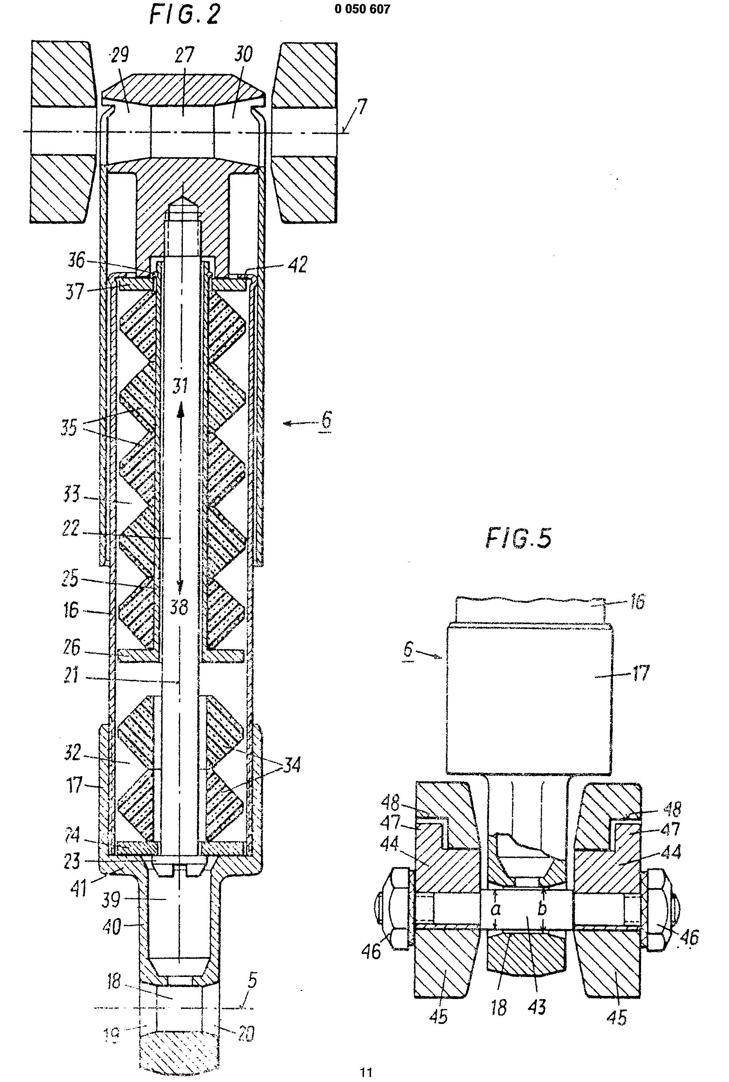

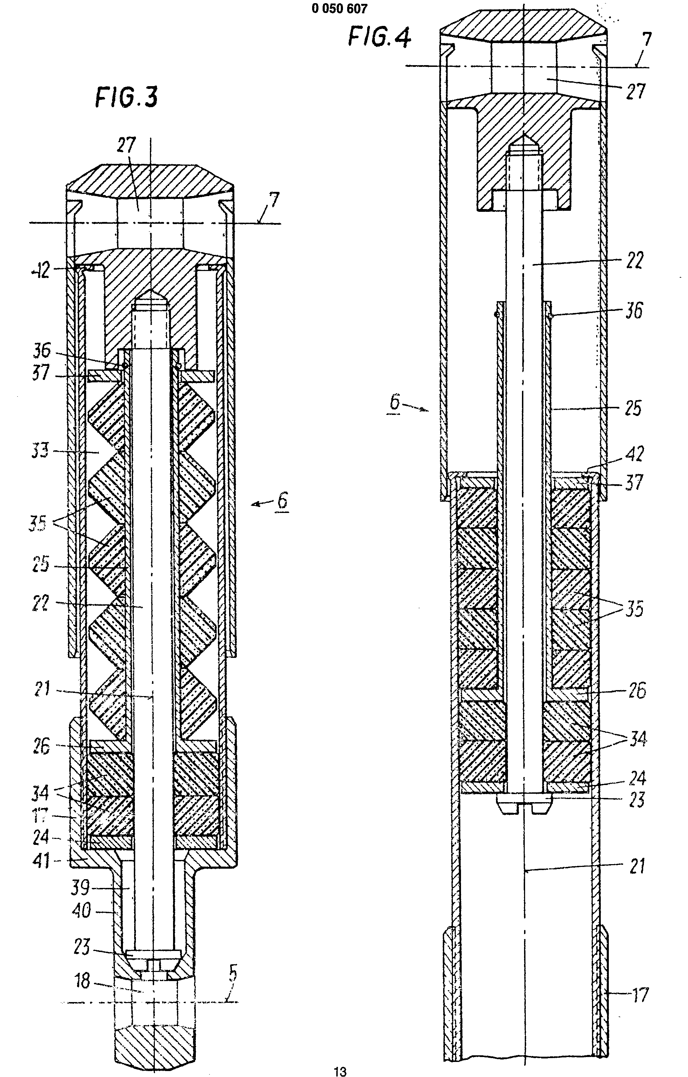

Die Erfindung wird nachfolgend an Hand eines in der Zeichnung dargestellten Ausführungsbeispieles näher erläutert. In dieser zeigen Fig. 1 schematisch eine Seitenansicht eines erfindungsgemässen Schuhes, Fig. 2 einen Schnitt durch das federnde und dämpfende Element in der neutralen Lage, Fig. 3 einen Schnitt analog zu Fig. 2 in der maximalen Rücklagestellung des Schaftes, Fig. 4 einen analogen Schnitt zu Fig. 2 in der maximalen Vorlagestellung des Schaftes, Fig. 5 ein Detail der Anlenkung des federnden und dämpfenden Elementes an der Schale, und Fig. 6 bis 8 verschiedene Drehlagen des Exzenters der Anlenkachse an der Schale.

In Fig. 1 ist der Schaft des Schuhes mit 1 und die Schale mit 2 bezeichnet. Die Achse 3 des Schaftes 1 schliesst mit der Sohlenebene 4 in der dargestellten neutralen Lage einen Winkel α von etwa 9 bis 12° ein. An der Schale 2 ist um eine Anlenkachse 5 schwenkbar ein federndes und dämpfendes Element 6 angelenkt, dessen anderes Ende am Schaft 1 um eine Anlenkachse 7 schwenkbar angelenkt ist. Das federnde und dämpfende Element 6 ist durch eine Fanglasche 8 gegen Verschwenkung in Richtung des Pfeiles 9 nach Lösen des der Anlenkstelle 7 zugeordneten Anlenkbolzens gesichert. Die Achse 3 des Schaftes 1 kann um die Anlenkstelle 10 in Richtung des Pfeiles 11 in die Vorlage verschwenkt werden, wobei das federnde und dämpfende Element 6 auf Zug beansprucht wird. Eine Friktion zwischen dem Schaft 1 und der Schale 2 wird hiebei über den gesamten zulässigen Verschwenkweg vermieden. Analoges gilt für die Verschwenkung in Richtung des Pfeiles 12, bei welcher das federnde und dämpfende Element auf Druck beansprucht wird. Der Schaft 1 steht über Faltenbälge 13 im Ristbereich und 14 im Fersenbereich mit der Schale 2 in Verbindung, so dass ein dichter Anschluss des Schaftes 1 an die Schale 2 gewährleistet ist. Mit 15 ist ein Schliessorgan am Schaft 1 angedeutet.

Das federnde und dämpfende Element 6 ist in Fig. 2 vergrössert im Schnitt dargestellt. Das federnde und dämpfende Element 6 ist als Zylinder-Kolben-Aggregat ausgebildet, dessen Zylinder 16 an seinem unteren Ende durch eine Überwurfmutter 17 abgeschlossen ist. Mit der Überwurfmutter 17 ist ein Lagerauge 18 starr verbunden, welches bei 19 und 20 doppelt konisch ausgebildet ist, um Verschwenkungen aus der Achse 21 des Zylinder-Kolben-Aggregates zu ermöglichen. Das Zylinder-Kolben-Aggregat weist eine Kolbenstange 22 auf, dessen unteres Ende 23 Anschläge für eine Ringscheibe 24 bildet. Es ist weiter eine Druckhülse 25 konzentrisch zur Kolbenstange 22 vorgesehen, welche einen radialen, als Ringscheibe ausgebildeten Flansch 26, aufweist. Die Kolbenstange 22 ist mit einem, ein weiteres Lagerauge 27 aufweisenden Kopf 28 starr verbunden. Auch das Lagerauge 27 weist konische Öffnungen 29 und 30 auf, um Schrägstellungen aus der Achse 21 zu ermöglichen. Bei Beanspruchung der Kolbenstange 22 auf Zug im Sinne des Pfeiles 31 schlägt die Anschlagfläche 23 an die Ringscheibe 24 an und die Ringscheibe 24, welche den Zugkolben bildet, wird angehoben. Der Arbeitsraum 32, 33 dieses von der Ringscheibe 24 gebildeten Zugkolbens, enthält Gummiringe 34, 35, welche trapezförmigen Querschnitt aufweisen. Bei der Bewegung der Kolbenstange 22 im Sinne des Pfeiles 31 werden nun die Gummiringe 34 und 35 verformt, wodurch die Gummiringe sowohl an die Kolbenstange 22 als auch an die Zylinderwandung des Zylinders 16 angepresst werden. Die zunehmende Anpressung an die Kolbenstange und die Wandung des Zylinders 16, führt zu einer zunehmenden Dämpfung. Im Bereich des oberen Arbeitsraumes 33 erfolgt die Pressung der Gummiringe 35 bei zunehmender Verformung des Querschnittes derselben gegen die Aussenwand der Druckhülse 25. Diese Druckhülse 25 wird bei einer Zugbeanspruchung der Kolbenstange 22 im Sinne des Pfeiles 31 frei mitgenommen und ist relativ zur Kolbenstange 22 frei verschiebbar. Um ein Eindringen der Druckhülse 25 in das Innere des Zylinder-Kolben-Aggregates und damit eine Beschädigung der Innenkante der Gummiringe 25 zu vermeiden, ist ein Sprengring 36 vorgesehen, welcher einen Durchtritt der Druckhülse 25 durch die obere Begrenzungsscheibe 37 nach unten verhindert. Die bei einer derartigen Zugbeanspruchung der Kolbenstange 22 auftretende Endlage des Zylinder-Kolben-Aggregates ist in Fig. 4 dargestellt und es ist ersichtlich, dass in dieser Endlage alle Gummiringe 34 und 35 nahezu vollständig verformt sind. Da Gummi ebenso wie elastomere Materialien nicht kompressibel ist, ergibt sich in dieser Endlage ein Anschlag, welcher ein weiteres Ausziehen der Kolbenstange 22 im Sinne des Pfeiles 31 verhindert. In der Endphase dieser Bewegung tritt eine starke Dämpfung durch Reibung der grösser werdenden Berührungsflächen der Gummiringe 34 und 35 an der Wand des Zylinders 16, sowie an der Kolbenstange 22, bzw. an der Druckhülse 25, auf. Der Weg in Richtung des Pfeiles 31 wird somit erst durch die weitgehend vollständige Verformung aller Gummiringe begrenzt. Eine derartige Belastung im Sinne des Pfeiles 31 entspricht einer Verschwenkung der Achse des Schaftes in die Vorlage und die Dimensionierung ist so getroffen, dass eine Verschwenkung nur bis zu einem Winkel α vor dem Sperrwinkel des Sprunggelenkes möglich ist.

In Fig. 2 ist das Zylinder-Kolben-Aggregat 6 in der neutralen Lage dargestellt, welche im Schnitt einer üblichen Vorlage von etwa 9 bis 12° entsprechen soll.

Bei einer Verschwenkung des Schaftes nach hinten, wie sie beispielsweise beim Stehen oder Gehen wünschenswert erscheint, wird die Kolbenstange auf Druck im Sinne des Pfeiles 38 beansprucht. Die Kolbenstange 22 weicht hiebei in eine Ausnehmung 39 des das Lagerauge 18 aufweisenden Teiles 40 aus. Zusammen mit der Kolbenstange 22 wird nun aber auch die Druckhülse 25 in Richtung des Pfeiles 38 mitgenommen. Die den Zugkolben bildende Ringscheibe 24 sitzt in einem nach innen ragenden Flansch 41 der Überwurfmutter 17 auf und der nach aussen ragende Flansch 26 der Druckhülse 25 wirkt nun als Druckkolben im Sinne einer Kompression der Gummiringe 34. Das Ende dieses Druckhubes im Sinne des Pfeiles 38 ist in Fig. 3 dargestellt und es ist ersichtlich, dass auch hier eine Dämpfung dadurch erzielt wird, dass die Gummiringe 34 zwischen Kolbenstange 22 und Zylinder 16 gepresst werden. Mit dem Kopf 28 wird hiebei die obere Begrenzungsscheibe 37 gleichfalls mitgenommen und der Zylinder 16 weist an seinem oberen Ende einen nach innen ragenden Bord 42 auf, welcher den Weg der Begrenzungsscheibe 37 nach oben bei einem Zughub im Sinne des Pfeiles 31 begrenzt. Auf diese Weise wird sichergestellt, dass die Druckhülse 25 nicht durch die obere Begrenzungsscheibe 37 hindurchtreten kann, wodurch die Gummielemente geschont werden.

In Fig. 5 ist die Verankerung des Zylinder-Kolben-Aggregates an der Schale dargestellt. Durch das Lagerauge 18 am unteren Ende des Zylinder-Kolben-Aggregates 6 ist ein Verankerungsbolzen 43 hindurchgeführt, dessen Aussendurchmesser a kleiner ist als der kleinste Innendurchmesser b des Lagerauges 18. Der Bolzen 43 ist an einem Exzenter 44 festgelegt, welcher innerhalb von Pratzen 45 der Schale drehbar angeordnet ist. Der Bolzen 43 ist beidseitig durch Muttern 46 gegen den Exzenter verspannt.

Die verschiedenen Drehlagen des Exzenters 44 bewirken nun eine verschiedene Höhenlage der durch den Bolzen 43 gegebenen Anlenkachse 5 an der Schale. Dies ist in den Fig. 6 bis 8 schematisch dargestellt. In der in Fig. 6 dargestellten untersten Lage kann somit die neutrale Lage des Zylinder-Kolben-Aggregates, wie sie in Fig. 2 dargestellt ist, auf einen Winkel von etwa 10° Vorlage eingestellt werden. In der in Fig. 7 dargestellten mittleren Lage ist die Dimensionierung vorzugsweise so getroffen, dass sich eine übliche Vorlage der Schaftachse und damit des Beines von etwa 12° ergibt, wobei die neutrale Lage des Zylinder-Kolben-Aggregates 6 dann bei einem Vorlagewinkel von 12° eintritt. In einer dritten, in Fig. 8 dargestellten Lage des Exzenters 44, kann die neutrale Lage des federnden und dämpfenden Elementes 6 auf einen grösseren Vorlagewinkel von beispielsweise 14° eingestellt werden. Die in den Fig. 6 bis 8 dargestellten Positionen des Exzenters 44 können durch Verrasten einer Nase 47 des Exzenters 44 in entsprechenden Ausnehmungen 48 der Pratzen 45 verriegelt werden.

### Patentansprüche

1. Skischuh mit einem an einer Schale (2) schwenkbar angelenkten Schaft (1) und einer von einem federnden und dämpfenden Element (6) gebildeten Einrichtung zur Begrenzung der Verschwenkung des Schaftes (1) relativ zur Schale (2), welches zwischen Schaft (1) und Schale (2) am Schaft und an der Schale schwenkbar festgelegt ist, insbesondere zur Verwendung mit einem Innenschuh, dadurch gekennzeichnet, dass der Schaft (1) frei schwenkbar an der Schale (2) angelenkt ist und dass das federnde und dämpfende Element (6) von einem doppelt wirkenden Zylinder-Kolben-Aggregat (16/24) gebildet ist, dessen Arbeitsräume (32, 33) elastomere Kunststoffe, insbesondere Gummielemente (34, 35) enthalten, deren Querschnittsform in dem einer neutralen Lage des Schaftes (1) relativ zur Schale (2), insbesondere einer üblichen Vorlage von 9 bis 12° zur Sohlenebene (4), entsprechenden entspannten Zustand das Volumen der Arbeitsräume nur unvollständig ausfüllt.

2. Skischuh nach Anspruch 1, dadurch gekennzeichnet, dass die Innenwand des Schaftes (1) über den gesamten Schwenkweg, vorzugsweise durch friktionsmindernde Beilagscheiben an den Gelenken (10), in Abstand von der Aussenwand der Schale (2) gehalten ist.

3. Skischuh nach Anspruch 1 oder 2, dadurch gekennzeichnet, dass der Schaft (1) über Faltenbälge (13, 14) im Ristbereich und im Fersenbereich mit der Schale (2) verbunden ist.

4. Skischuh nach einem der Ansprüche 1, 2 oder 3, dadurch gekennzeichnet, dass das federnde und dämpfende Element (6) im Fersenbereich des Schuhes angeordnet ist.

5. Skischuh nach einem der Ansprüche 1 bis 4, dadurch gekennzeichnet, dass die Elemente aus elastomerem Kunststoff, insbesondere aus Gummi (34, 35), als in Achsrichtung des Zylinder-Kolben-Aggregates (16/24) übereinander angeordnete O-Ringe bzw. als Ringe mit im wesentlichen dreieckigem Querschnitt, ausgebildet sind.

6. Skischuh nach einem der Ansprüche 1 bis 5, dadurch gekennzeichnet, dass ein Druckkolben (26) und ein Zugkolben (24) jeweils als gesonderte Scheibe ausgebildet sind, welche mit Anschlägen einer Kolbenstange (22) zusammenwirken.

7. Skischuh nach Anspruch 6, dadurch gekennzeichnet, dass der Anschlag der den Druckkolben (26) bildenden Scheibe als relativ zur Kolbenstange (22) verschiebbar gelagerte Druckhülse (25) ausgebildet ist, welche sich durch die Elemente (35) für die Dämpfung der Vorlage erstreckt und eine obere Begrenzungsscheibe (37) durchsetzt.

8. Skischuh nach Anspruch 7, dadurch gekennzeichnet, dass die Druckhülse (25) eine axiale Länge von 60 bis 80% der axialen Gesamtlänge der entspannten Elemente (35) aus elastomerem Kunststoff, insbesondere Gummi, aufweist.

9. Skischuh nach einem der Ansprüche 1 bis 8, dadurch gekennzeichnet, dass das Zylinder-Kolben-Aggregat (16/24) an seinen beiden Enden Lageraugen (18, 27) mit den Durchmesser des zugeordneten Verankerungsbolzens (43) zumindest teilweise übersteigendem Innendurchmesser aufweist.

10. Skischuh nach einem der Ansprüche 5 bis 9, dadurch gekennzeichnet, dass der Verankerungsbolzen für die Verankerung des Zylinder-Kolben-Aggregates (16/24) am Schaft (1) lösbar und gegen Verlust gesichert ausgebildet ist, und dass das Zylinder-Kolben-Aggregat am Verankerungsbolzen (43) an der Schale (2), insbesondere durch eine Fanglasche (8), begrenzt verschwenkbar angelenkt ist.

11. Skischuh nach einem der Ansprüche 5 bis 10, dadurch gekennzeichnet, dass der Anlenkbolzen (43) für das Zylinder-Kolben-Aggregat (16/24) an der Schale (2) an einem Exzenter (44) angeordnet ist, dessen Drehlagen feststellbar sind.

## Claims

1. Ski boot comprising a shaft (1) being hinged on a shell (2) and means for limiting the swivelling of the shaft (1) relative to the shell (2) formed by a resilient and damping element (6) being hinged on shaft and shell between shaft (1) and shell (2), in particular to be used with an inner shoe, characterized in that the shaft (1) is freely hinged on the shell (2) and that the resilient and damping element (6) is formed by a double-acting cylinder-piston aggregate (16/24) whose working spaces (32, 33) contain elastomeric synthetic plastics materials in particular rubber elements (34, 35), whose cross-sectional form fills the volume of the working spaces only incompletely in a state of released tension adequate to a neutral position of the shaft (1) relative to the shell (2), in particular to a standard forward bending of 9 to 12 degrees to the sole plane (4).

2. Ski boot as claimed in Claim 1, characterized in that the inner wall of the shaft (1) is held at a distance from the outer wall of the shell (2) over the entire swivel way, preferably by washers at the joints (10) that lessen the friction.

3. Ski boot as claimed in Claim 1 or 2, characterized in that the shaft (1) is connected with the shell (2) by bellows (13, 14) in the instep portion and in the heel portion.

4. Ski boot as claimed in any one of the Claims 1, 2 or 3, characterized in that the resilient and damping element (6) is placed in the heel portion of the boot.

5. Ski boot as claimed in any one of the Claims 1 to 4, characterized in that the elements of elastomeric synthetic plastics material, in particular of rubber (34, 35), are formed as O-rings superimposed in axial direction of the cylinder-piston aggregate (16/24) or as rings with an essentially triangular cross-section, resp.

6. Ski boot as claimed in any one of the Claims 1 to 5, characterized in that a push piston (26) and a pull piston (27) are formed each as a separate disk co-operating with catches on a piston rod (22).

7. Ski boot as claimed in Claim 6, characterized in that the catch of the disk forming the push piston (26) is designed as a thrust sleeve (25) that rests displaceably relative to the piston rod (22), extends through the elements (35) for damping the forward bending and passes through an upper limit disk (37).

8. Ski boot as claimed in Claim 7, characterized in that the thrust sleeve (25) has an axial length of 60 to 80 per cent of the over-all axial length of the released elements (35) of elastomeric synthetic plastics material, in particular rubber.

9. Ski boot as claimed in any one of the Claims 1 to 8, characterized in that the cylinder-piston aggregate (16/24) at both its ends has bearing eyelets (18, 27) with an inner diameter that is at least partly larger that the diameter of the coordinated holding-down bolt (43).

10. Ski boot as claimed in any one of the Claims 5 to 9, characterized in that the holding-down bolt for the holding down of the cylinder-piston aggregate (16/24) is releasable at the shaft (1) and designed to be safe against loss and that the cylinder-piston aggregate is finitely hinged on the holding-down bolt (43) on the shell (2), in particular by a safety strap (8).

11. Ski boot as claimed in any one of the Claims 5 to 10, characterized in that the holding-down bolt (43) for the cylinder-piston aggregate (16/24) at the shell (2) is placed at an eccentric (44) whose swivel positions are arrestable.

## Revendications

1. Chaussure de ski comportant une tige (1) articulée de façon pivotante sur une coquille (2) et un dispositif constitué par un élément élastique et amortisseur (6) pour limiter le pivotement de la tige (1) par rapport à la coquille (2), qui est fixé à pivotement entre la tige et la coquille sur la tige et sur la coquille, notamment pour l'utilisation avec une chaussure intérieure, caractérisé par le fait que la tige (1) est articulée sur la coquille (2) de manière à pouvoir pivoter librement et que l'élément élastique et amortisseur (6) est constitué par un ensemble cylindre-piston (16/24) à double effet, dont les chambres de travail (32, 33) contiennent des matières plastiques élastomères, notamment des éléments de caoutchouc (34, 35) dont la forme de section, à l'état de repos correspondant à une position neutre de la tige (1) par rapport à la coquille (2), notamment une position avancée classique de 9 à 12° par rapport au plan de semelle (4), ne remplit qu'incomplètement le volume des chambres de travail.

2. Chaussure de ski selon la revendication 1, caractérisée par le fait que la paroi intérieure de la tige (1) est maintenue, sur toute la course de pivotement, de préférence par des disques intercalaires de réduction de friction sur les articulations (10), à distance de la paroi extérieure de la coquille (2).

3. Chaussure de ski selon la revendication 1 ou 2, caractérisé par le fait que la tige (1) est reliée à la coquille (2), dans la zone de cou-de-pied et dans la zone de talon, par l'intermédiaire de soufflets plissés (13, 14).

4. Chaussure de ski selon l'une des revendications 1, 2 ou 3, caractérisée par le fait que l'élément élastique et amortisseur (6) est disposé dans la zone de talon de la chaussure.

5. Chaussure de ski selon l'une des revendications 1 à 4, caractérisée par le fait que les éléments en matière plastique élastomère, notamment en caoutchouc (34, 35) sont agencés sous forme de bagues toriques ou de bagues de section droite sensiblement triangulaire disposées l'une sur l'autre dans la direction axiale de l'ensemble cylindre-piston (16/24).

6. Chaussure de ski selon l'une des revendications 1 à 5, caractérisée par le fait qu'un piston de compression (26) et un piston de traction (24) sont agencés chacun sous forme d'un disque distinct et coopèrent avec des butées d'une tige de piston (22).

7. Chaussure de ski selon la revendication 6, caractérisée par le fait que la butée du disque formant le piston de compression (26) est agencée sous forme d'un manchon de compression (25) monté à coulissement par rapport à la tige de piston (22), qui s'étend au travers des éléments (35) pour l'amortissement de la position avancée et traverse un disque supérieur de limitation (37).

8. Chaussure de ski selon la revendication 7, caractérisée par le fait que le manchon de compression (25) a une longueur axiale comprise entre 60 et 80% de la longueur axiale totale au repos des éléments (35) en matière plastique élastomère, notamment en caoutchouc.

9. Chaussure de ski selon l'une des revendications 1 à 8, caractérisée par le fait que l'ensemble cylindre-piston (16/24) comporte, à ses deux extrémités, des œillets d'appui (18, 27) ayant un diamètre intérieur dépassant au moins partiellement le diamètre de la broche d'ancrage associée (43).

10. Chaussure de ski selon l'une des revendications 5 à 9, caractérisée par le fait que la broche d'ancrage servant à l'ancrage de l'ensemble cylindre-piston (16/24) sur la tige (1) est agencée de façon démontable et fixée de manière imperdable et que l'ensemble cylindre-piston est articulé dans la zone de la broche d'ancrage (43) sur la coquille (2), notamment par l'intermédiaire d'une éclisse de retenue (8), afin de pouvoir pivoter de façon limitée.

11. Chaussure de ski selon l'une des revendications 5 à 10, caractérisée par le fait que la broche d'articulation (14) de l'ensemble cylindre-piston (16/24) sur la coquille (2) est disposée sur un excentrique (44) dont les positions angulaires peuvent être fixées.

FIG.1

FIG.6    FIG.7    FIG.8

FIG.2

FIG.5

FIG.3

FIG.4